Europäisches Patentamt

European Patent Office

Office européen des brevets

(19)

(11) **EP 1 047 256 A2**

(12) **EUROPEAN PATENT APPLICATION**

(43) Date of publication:
25.10.2000 Bulletin 2000/43

(51) Int Cl.⁷: $H04M\ 3/42$, $H04M\ 3/493$

(21) Application number: 00830296.0

(22) Date of filing: 18.04.2000

| | |
|---|---|
| (84) Designated Contracting States:<br>AT BE CH CY DE DK ES FI FR GB GR IE IT LI LU MC NL PT SE<br>Designated Extension States:<br>AL LT LV MK RO SI<br><br>(30) Priority: 23.04.1999 IT RM990252<br>30.07.1999 IT RM990491<br><br>(71) Applicant: **Cirte Manifatturiera S.p.A.**<br>**84135 Salerno (IT)** | (72) Inventor: **Adamo, Cataldo**<br>**84135 Salerno (IT)**<br><br>(74) Representative:<br>**Fiammenghi-Domenighetti, Delfina et al**<br>**Fiammenghi-Fiammenghi**<br>**Via Quattro Fontane 31**<br>**00184 Roma (IT)** |

(54) **Automatic access method in subscriber information lists**

(57) Automatic access method in subscriber information list using telephone keypad, comprising the following operative steps:

I. typing in on the keypad, for each letter only one numeric key;
II. acquisition of a sequence of fields, corresponding to the subscriber, in numeric form;
III. sending, to a database server (14), single fields typed in, database server (14) administering files comprising only numeric records, said files being obtained through a biunivocal correspondence with real subscriber database (15);
IV. extrapolating for each input string a numeric string list with relative logical localizations of N-best numeric keys and sorting each of said N-best numeric key lists according to success probability;
V. intersecting the N-best numeric key lists, regarding different fields comprised in the input starting data, and sorting the intersection result according to whole probability, to access subscribers database (15) and to propose the user, only combinations really comprised in the database for final confirmation.

FIG. 1

EP 1 047 256 A2

**EP 1 047 256 A2**

**Description**

The invention refers generally to information automatic retrieval techniques in informatic files and particularly it relates to an application utilizable for automatic access both to residential subscriber information list and to business subscriber information list using telephone keypad.

Different automatic access techniques into subscriber information list, have been already proposed. Many of these refer to a telephone front-end interfaced with a vocal recognition system which can analyse and codify natural language according to specific factors like the dictionary, the spontaneity, the dependence from the speaker ecc. In the most sophisticated solutions this vocal recognition should be efficient also without scanning or syllabizing the single word.

Unfortunately the instrument of spoken recognition is frequently ineffectual, particularly when the interlocutor has an high speaking speed or inflections and intonations differently marked due to geographic origin, age and sex. On the other hand we know that almost all telephone sets have a keypad arranged for typing in and transmission of alphanumeric data, the telephone exchanges themselves actually being all digital exchanges.

However the procedure of transmitting messages consisting of alphabetic characters is much difficult and easily it leads the user to type in wrong characters.

In fact the technique used is based on dividing the whole alphabet making a set of three/four letters to correspond with only one number. The method normally used on typing in an alphabetic field consists on pushing a key so many times according to the position of letter on the same keypad text.

For example keypads of cellular telephones ETACS and GSM use actually twelve keys for typing in numeric and alphabetical information: 2-9 keys for composition of number and letters, and keys 0,1,* and # for special functions. For typing in of alphabetic words the technique used is that one of dividing the whole alphabet by making a set of 3/4 letters correspond with only one number as so reported:

| NUMBER | LETTERS |
|--------|---------|
| 2 | A,B,C |
| 3 | D,E,F |
| 4 | G,H,I |
| 5 | J,K,L |
| 6 | M,N,O |
| 7 | P,Q,R,S |
| 8 | T,U,V |
| 9 | W,X,Y,Z |

The digitisation of an alphabetic letter is obtained typing in so many times the corresponding key according to its positions. For example if we want to type in letter "C", we have to digitate key 2 three times.

This access method is clearly complicated and therefore not very practical, both for possible mistakes typing in a key instead of another and for possible mistakes in the times the same key had to be pushed.

Particularly cellular keypads, for their reduced dimensions, can take the user on making mistake typing in a character instead of another.

The object of this invention is that of providing the telephone user, another access possibility both to data base of residential subscriber information list and to data base of business subscriber information list through typing in and sending of alphabetic words made by pushing only one telephone key for each letter corresponding.

Another object of the present invention is to provide with an automatic access method both to data base of residential subscriber information list and to data base of business subscriber information list, optimized on the basis of preliminary statistical valuation of files content, in which the search is performed and provided with procedures for minimizing penalizations on retrieval result, due to typing in mistakes.

Another object of the present invention is to obtain an automatic access to subscriber information list by using cellular keypad, which employs standard hardware resources, protocols and procedures in telephony field for making access method in low price and easy utilization for the user.

The retrieval technique according to the present invention allows to get excellent results even with the only fields corresponding to the surname, the name or the address, and the place. Therefore the operative sequence to be performed by the user may be made easier, skipping the name or the address of the subscriber.

The system is characterized by an excellent mistake tolerance also when one or more fields have a typing in mistake for wrong substitution of a character with another or for addition or omission of a character with respect to the alphabetic string the user intended to type in.

2

Obviously proposed technique does not block utilization of previous ones, like for example retrieval procedures based on spoken recognition systems, but it's an instrument which cooperates with the already known ones providing the user with a retrieval automatic service versatile and efficacious. So also when the system cannot give a correct or sufficiently reliable result or when there is a high number of alternatives - for example with the same name and surname - anyway it is possible that the user can interconnect himself with an operator.

The aforesaid objects and others, that will be illustrated during the following description, have been achieved by an automatic access method in subscriber information list using telephone keypad - operative on fixed telephone network or on cellular telephone network - based on an interactive conversation for service enabling and utilization which comprises the following operative steps:

I. enabling the user, who wants to perform a telephone number search, to type in on the keypad, for each letter of every string which forms a basic information field from which finding the user telephone number, only one specific corresponding numeric key and to type in a particular final control key as terminator;

II. performing an acquisition, by said means dedicated to the interactive conversation, of a sequence of fields corresponding to the subscriber we want to take the telephone number. Each of these fields is acquired in numeric form and delimited by said terminator character;

III. sending, by means of said dedicated means, to a database server, single fields typed in by the telephone user in form of numeric fields and said database server performs requested retrieval operations as it can administer files comprising for each key and relative attributes, from extensional point of view, only numeric strings - these files are obtained by means of an attribute - key biunivocal correspondence with subscriber database content, comprising from extensional point of view, records with alphanumeric strings-;

IV. comparing each input numeric string of a retrieval request with each numeric string included into the single fields list corresponding to starting information/field from which to find the telephone number, extrapolating for each input string a numeric strings list with relative logical localizations of N-best numeric keys coinciding exactly or partially with said input string and sorting each of these latter N-best numeric keys lists according to success probability;

V. combining the N-best numeric keys lists, regarding different fields comprised in the input starting information, and sorting the same according to total probability, the overall numeric keys list so obtained, logically corresponding to a similar list in alphabetic form regarding same subscribers database, is used to enter subscribers database and to propose the user only combinations really comprised in same database for final confirmation.

The technique according to the present invention can perform the information retrieval both in residential subscriber information list service, and in business users information list service.

For searching in residential subscriber information list service the fields regarding surname, name and/or address and place are asked and acquired; reference database access is performed with data arrangement procedures for utilization with i-th keypad coding, procedures dedicated to typing errors and algorithms dedicated to uncertainties control. For searching in business users information service there are asked and acquired the fields regarding marketing category and/or address, company denomination and place name regarding searched business users; reference database access is made with data arrangement procedures for utilization with i-th keypad coding, procedures dedicated to typing errors control, techniques dedicated to synonyms control and algorithms dedicated to uncertainty control.

Found names, if any, are provided to the user by a most high hit probability list.

For better explaining the invention and not, for this, limiting the generality and possible application fields of the same, next some preferreded embodiments are described regarding enclosed figures, in which:

Fig. 1 is a general representation of telephone system architecture regarding one of said embodiments which can use access technique based on the present invention;

Figs. 2A and 2B are general block diagrams regarding two retrieval procedures based on the invention;

Fig. 3 is a block diagram which schematizes into details data acquisition step 23' of block diagram in Fig. 2A;

Fig. 4 is a block diagram which shows into detail retrieval step procedures 24' of Fig. 2A;

Fig. 5 is a block diagram which schematizes into detail the final search data presentation step - 25' in Fig. 2A -, to the requester;

Fig. 6 is a block diagram which schematizes into detail data acquisition step - 23" in block diagram of Fig. 2 B -; and

Fig. 7 is a block diagram which reports into detail the retrieval step procedures - 24" in Fig. 2B-.

In telephone number request service from subscribers list according to the present invention, user with his telephone set connected to telephone network, is asked through pre-recorded messages to type in on keypad the information regarding user/subscriber he wants to get the telephone number.

Each single field is entered by pushing only one numeric key per alphabetic letter, followed by a final terminator like for example a character "#".

Information obtained by typing in different keys in sequence is sent automatically from telephone set to the database server which will perform the real retrieval operation.

As we can see any string digitated in this way could not be recognized univocally. For example if we want to enter the word "bacio" with telephone set keypad, the numeric sequence "22246" should be typed in. It's clear that to this numeric sequence can correspond other words like for example "cacio" being letter "c" codified with the same numeric key. This fact means that the search of these words in a database is not deterministic.

As we will better see in the following section, system according to the present invention can instead select, accessing to a database server, the requested telephone number on the basis of uncertainty control specific techniques.

Description foresees in this first part, to show preliminary two possible embodiments of the basic system architecture, according to interaction modalities of a user, -provided with a cellular telephone set-, with the subscriber information list service. These interactions can be:

1) vocal kind, or
2) by means of a menu.

Vocal interactive modality has been thought for all the users who have cellulars both analogue Etacs and digital GSMs, instead, interaction modality managed by menu, has been thought for that category of mobile telephony users employing a GSM apparatus based on GSM SIM toolkit and/or on WAP.

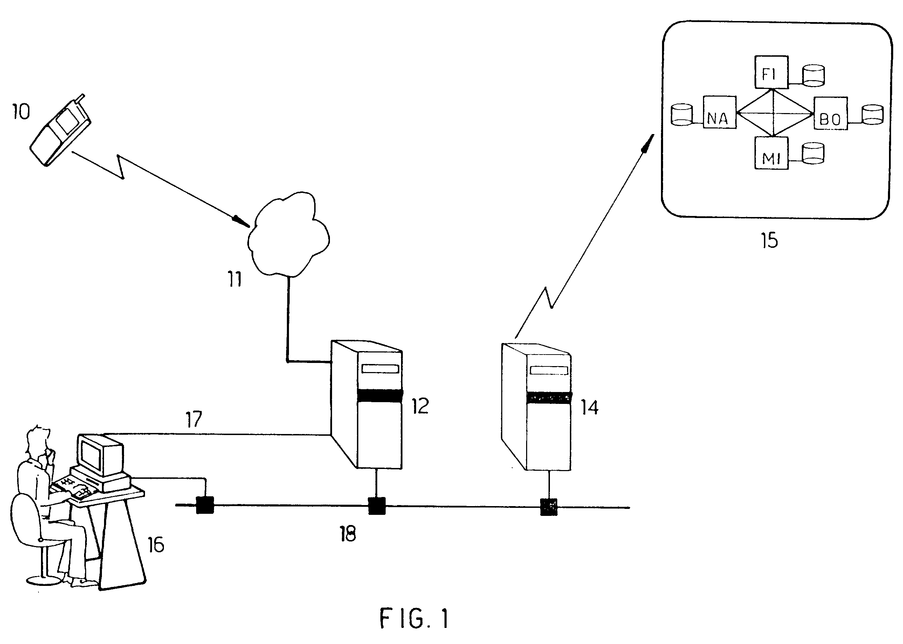

In vocal interaction system - which is specially that one, the system architecture reported in Fig. 1 one refers to - automatic access method to subscriber information list service is based fundamentally on CTI (Computer Telephony Integration) equipment including the telephone front-end 12 and the server 14 for subscribers database 15 access. Telephone front-end 12 is responsible for interaction between user and system and leads the user, connected on telephone network 11, by means of pre-recorded messages, on executing correctly all the operations of data typing in by telephone 10 keypad.

Database server 14 performs instead the search, of the most probable telephone number of searched subscriber on the basis of data provided by the user.

Telephone front-end 12 which forms the user/computer interface has been planned with ergonomicity standards to facilitate the user during different interaction phases.

It transmits sequentially:

A) a welcome message,
B) data entering messages,
C) data confirmation messages,
D) closing messages.

Welcome message must show the user the kind of service offered, besides all the information regarding interaction modalities. For example it's asked the user to type in on the keypad for each letter only one corresponding numeric key and to type in key "#" as terminator of every word. Data entering messages are messages which invite the user to type in on keypad the fields regarding subscriber surname, name, place, address with respect to which we want to find telephone number. User can choose to enter the system, with surname or place, the only name or address when one of these information is not known a priori. Next user/computer system conversation step provides the user results in form of text-to-speech, these latter having been obtained by processing data received in previous input phase. User, performing his choice types in on keypad the number corresponding to the alternatives proposed by the system. When system can not provide a correct answer, or telephone database has a high number of alternatives with same surname and name then system links user with an operator 16. In that case operator 16, with the notice of a new call coming by analogue line 17, receives on his terminal, through a data network 18 of the LAN type, names list selected by the user, facilitating him during final selection phase of subscriber to be chosen. At the end of interaction, system sends the user, subscriber telephone number requested through text-to-speech, providing to charge at the same time user for service offered.

Database server 14 is the heart of all the system because it is responsible in processing data typed in by telephone user 10 and received by telephone front-end 12 as DTMF tunes. Each single field typed in by the user is sent from telephone front-end to database server 14 as numeric field. Numeric string, if there are not typing in errors, will be long exactly like the alphabetic one because, each alphabetic letter, corresponds to one and only one numeric code. In the same way instead more alphabetic strings could correspond to just one numeric string.

We can see now what happens when a user types in on telephone keypad the surname of a subscriber of whom he is looking for telephone number.

Numeric string received from the database server will be compared with each numeric string comprised into the only surnames list regarding chosen town.

Matching phase will have to take off a localization list (n-best) on database server, of numeric strings coinciding exactly or partially with the input string.

Each one of said localizations will be associated to an hit probability; the most high value of this latter will be for coinciding strings and lower success probability for strings gradually much discordant. To n-best numeric list so made will correspond a similar alphabetic surnames list. In the same way as for surname, also fields regarding name, place and address will be compared, each one, respectively with the only name, place, addresse list taken out from subscribers database.

By means of their processing there will be taken off n-best lists of logical localizations of each single field in the database server, sorted according to hit probability of single member included in the list.

So, the n-best lists regarding surname, name, place and address localization will be combined with each other and sorted according to total probability. The overall list so created will be used to enter in subscribers database. Only the combinations, existing in database, will be proposed the user for definitive confirmation.

It's clear that implemented techniques is based on a specific interrelation between database server 14 and database 15 of subscriber information list service so that the corresponding data alignment is constantly guaranted. In this way we can operate on numeric field or key of database server 14, keeping logically a correspondence with one and only one alphanumeric field or key of subscribers database 15.

In the second system architecture kind considered which is based on interactive menu, we have to refer instead to GSM cellular telephones based on GSM SIM toolkit (phase 2plus) and/or on WAP. With this kind of cellulars user/computer system interaction is realized directly on user cellular telephone by using a guided menu. In case of an implementation based on SIM toolkit GSM technique, menu call on telephone display and interactive link between user and remote server are direct managed by an application stored in the SIM card. In case of an implementation based on WAP technique, menu call on telephone display and interactive link with an user are directly managed together with data processing by a WAP procedure stored in the remote server.

Phases implemented on cellular telephone are the next:

1. Data entry;
2. Transmitting data to the server;
3. Database enquiry;
4. Transmitting the answer;
5. Answer processing and visualisation on cellular telephone display;
6. Calling execution to the searched number.

1. Data entry

Through navigation in application sub-menus, on cellular telephone display there are shown each time the user name, surname, place and address typing in requests of subscriber we want to know telephone number. User, employing technique previously showed, that is to type in for each letter one and only one key corresponding, fulfils data entry phase.

2. Transmitting data to the server

Data entered by the user are formatted and transmitted by the telephone set to a server arranged for processing them. For example to "Rossi Mario Roma" it corresponds a message like "76774=62746=7662".

3. Database inquiry

When data are received by the server these are processed through all the operative steps in order to decide ambiguity cases and to find in the database searched subscriber telephone number as in the first kind of embodiment already shown.

4. Transmitting the answer

When data elaboration is finished, server has to send to the cellular telephone, the search result conveniently formatted to contain, in only one data transmission, the maximum possible number of alternatives to be provided to the user.

5. Answer processing and visualisation on cellular telephone display.

Information received by the cellular telephone is in turn shown the user in priority order, with relative searched telephone number.

6. Calling the searched number.

When requested name and telephone number are confirmed, the user can perform directly the number selection confirming his choice through a specific enter key. This method makes possible to automatize searched subscriber calling.

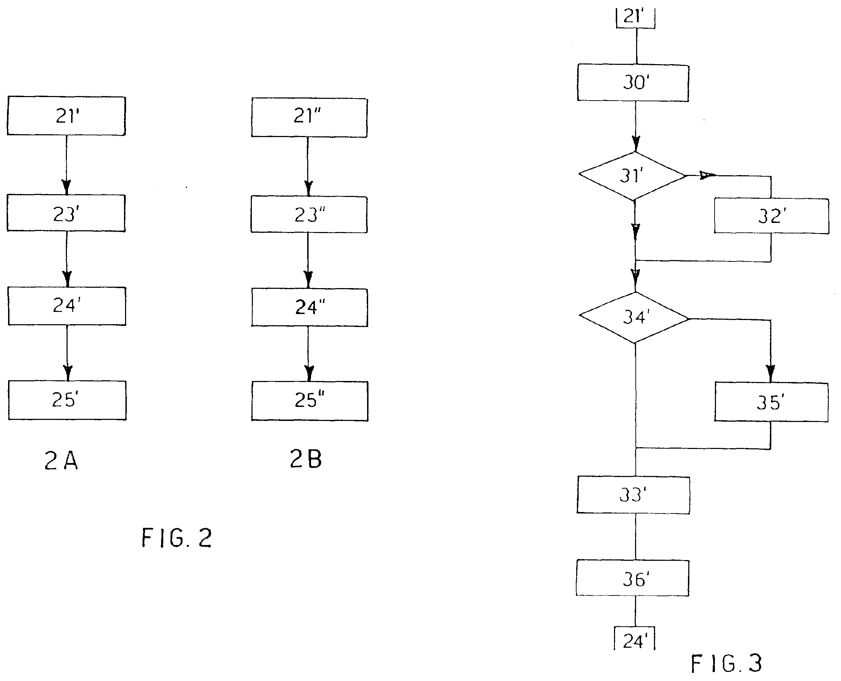

Fig. 2 is a concise representation, in two block diagram - one regarding residential subscriber list automatic access, the other one regarding business subscriber list automatic access - of different phases characterizing data acquisition and searched telephone number retrieval using the keypad of any telephone set.

In access service phases 21', 21", together with a welcome message, the user is informed about the kind of service offered besides all the information regarding interactive modality. For example a presentation message which can be given the caller is: "service makes possible to get business/residential subscriber telephone number, typing in on telephone keypad requested information, followed by key '#'. For each letter please push, corresponding key only once. To introduce characters as: space, accent and others, push key '1'". As we will read in the following description a telephone front-end with vocal interaction can always drive the user in all service execution phases, with pre-recorded messages, to perform correctly all data typing in operations through telephone keypad.

Service presentation phases 21' and 21" are essentially the same in the two access typologies, represented in Fig. 2A and 2B, regarding respectively to residential subscribers list and to business users list.

Instead in next phases after the initial one, as shown in Fig. 2, there are characterizing distinguishing elements, because besides proposing specific messages, requests and data entry typology 23', 23" optimized according to the kind of application, retrieval procedures 24', 24" refer to database organized on specific access techniques implemented ad hoc.

Anyway search acquired information through procedures 24', 24" in database are provided to the user in final phase 25, 25' in priority order, with searched relative telephone number, by vocal synthesizer (text-to-speech) or by other visualisation means.

Fig. 3 is a block diagram showing into better detail sequence of operations included in inquiring and entering phase 23' of Fig. 2A.

This section regarding specifically information retrieval in residential subscriber list includes an inquiring messages sequence inviting user to type in 30' on telephone keypad, the surname field followed from terminator character. A typical phrase could be "type in the surname followed by '#' " followed by DTMF acquisition of same surname.

Choice 31' refers to a front-end query asking the user if it is known subscriber name whose telephone number is requested. In case it was available, after usual request "type in name followed by '#'", acquisition 32' by means of DTMF keypad is performed.

Choice 34' refers to a front-end query asking the user if it's known subscriber address whose telephone number is requested. In case it was available after usual request "type in address followed by '#'" acquisition 35' by means of DTMF keypad is performed.

Place field is not optional, for this reason as surname field it will be acquired by DTMF typing in 33', following usual presentation provided by the front-end, like "type in place followed by '#'".

In practice user can choose to give the system, with surname and place, the only name or the only address when one of these data is not known a priori.

This section regarding data entry which refers to users whose telephone number we want to know, finishes with a confirmation message 36'.

It is important to stress again that data entry is done typing in for each letter one and only one corresponding key, for that reason every single field typed in by the user is sent from telephone front-end to system performing the search, in form of numeric field. Numeric string, if there are not typing in mistakes, will be exactly as long as the alphabetic one, because, to each alphabetic letter corresponds one and only one numeric code; even if to a numeric string there would correspond, instead, more than one alphabetic string.

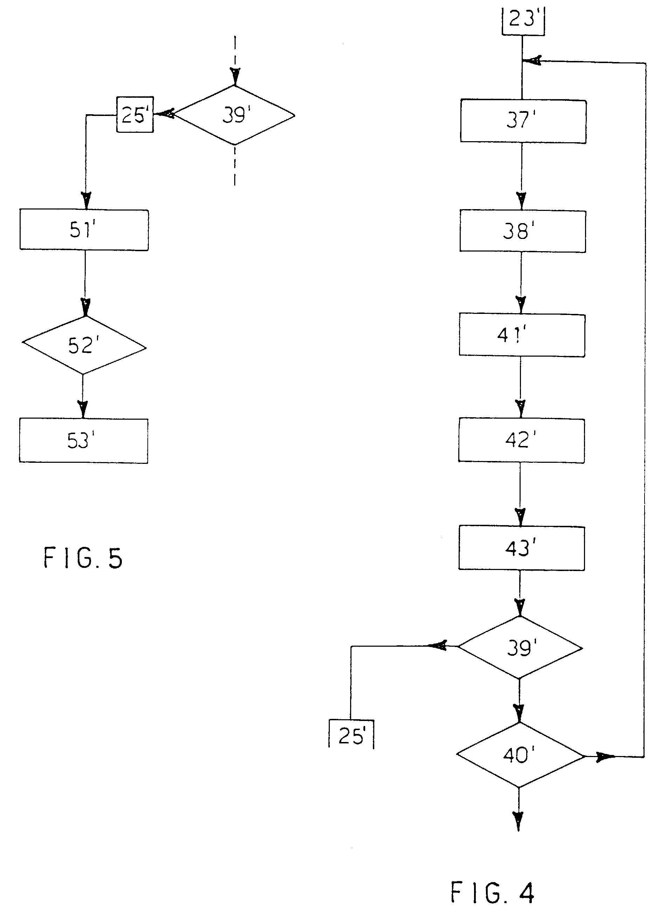

In Fig. 4 there are shown in detail procedures characterizing the very retrieval phase of block 24' in Fig. 2A.

Cycle with end exit test 40' is originated from the technique used by the system to discriminate possible kinds of telephone keypad on fixed calling line. In fact, a different association between keypad numeric code and alphabetic characters, have been found for telephone actually on sale. Analyzing different kinds of keypads present on the market, it has been found that they can be associated to five different kinds. Differences with respect to new telephone generation having a standard keypad configuration, are essentially due to different positions of letters "Q", "Z" and "O" or to a different use of key "1" used to codify alphabetic letters "A,B,C". In the following table there are shown some keypad codification typologies actually most common in telephone set on sale.

| Telephone Keyboard Char Set | | | | | |
|---|---|---|---|---|---|
| Digit | GSM96 | NOKIA | TELITAL | ERICSSON | MICROTAC |
| 0 | | o q z | all other chars | all other chars | q z |
| 1 | all other chars | all other chars | a b c | a b c | all other chars |
| 2 | a b c | a b c | d e f | d e f | a b c |
| 3 | d e f | d e f | g h i | g h i | d e f |
| 4 | g h i | g h i | j k l | j k l | g h i |
| 5 | j k l | j k l | m n o | m n o | j k l |
| 6 | m n o | m n | p q r | p q r | m n o |
| 7 | p q r s | p r s | s t u | s t u | p r s |
| 8 | t u v | t u v | v w x | v w | t u v |
| 9 | w x y z | w x y | y z | x y z | w x y |

Solution according to the present invention provides that in order to discriminate the kind of keypad, the system analyses codes availability, using as conversion table, the one of a standard keypad, and in case subscriber name is not present in database, a similar search, considering conversion table regarding another keypad, is started. This process continues in order to select the availability of name searched in database.

When data preparation 37' is performed according to the codification of i-th keypad, before the very selection and search operations 42' in database, execution of procedures dedicated to typing in mistakes control 38', and to uncertainty control 39' is performed on codified data; about these procedures we will have more to say later on. Block diagram in Fig. 4 includes substantially a cycle allowing to consider each time different association and conversion 37' between numeric keypad code and alphabetic character set. This cycle has two exit end tests 39' and 40' from which we get iteration termination in case the name has been found in data base or in case all kinds of keypad have been tested with simultaneous insuccess of search 42'.

On the other hand in this cycle 24', positive result in search phase 42' allows generating a list 43' of subscribers with higher probability to be accepted by the user.

Next user/computer system "talking" phase 25' consists of giving the user, in the form of text - to - speech, results from processing data received in previous phase.

Fig. 5 is a block diagram showing into detail procedures characterizing final phase 25', transmitting the user, search result.

Choice 39' of Fig. 5 allows to accertain if subscriber list includes at least an element and in case at least one subscriber has been found proposal 51' is provided showing the user (in text - to - speech), one at a time, the first n-subscribers with higher probability in the list (if they are present in number of n) according to priority fixed algorithmically.

Now user, by choice 52', can decide interactively to confirm a specific name in the list, by pushing a correspondent key, in order to receive corresponding subscriber telephone number through text-to-speech 53'. Instead in case user thinks proposed subscribers names not correct, he can avoid entering in confirmation phase and acquire message in which is said that requested subscriber is resulted inexistent. As aforesaid mentioned in case of retrieval insuccess, we can anyway put user in communication with an operator.

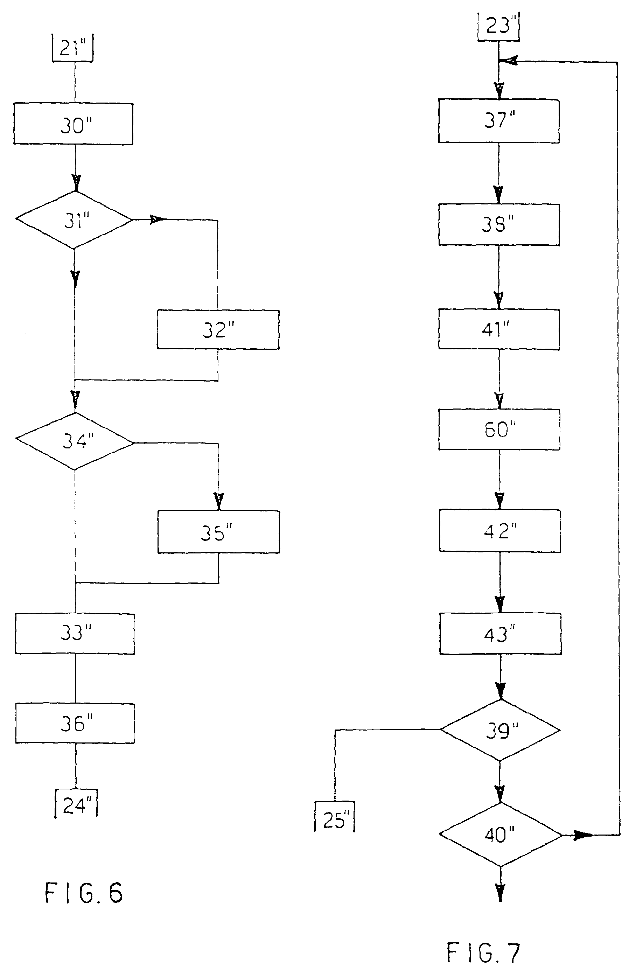

Passing to analyse sections included in business users, subscribers information list automatic access procedures, as already said and so as schematized generally in Fig. 2A, phase 21' is substantially similar to phase 21". In fact it includes service presentation and relative performing modalities. Next phase 23" - having a much detailed description in block diagram of Fig. 6 - is characterized by the request of data typology different from the already enumerated ones provided for retrieval in residential users list.

In fact - as it's well known for this kind of information requests- frequently we don't know subscriber address and his denomination is known unexactly. For example a classic information request could be the one regarding "SAEM s.r.l." company, instead in data base company is stored as "SAEM ABBIGLIAMENTO S.r.l."; still much frequently the user can provide for information regarding marketing category of requested subscriber -however also that inexact - .

Fig. 6 is a block diagram showing into detail sequence of relations included in inquiring and entering phase 23" of Fig. 2B. It comprises a sequence of acquisition messages inviting user first to type in 30" on telephone keypad the field regarding company denomination, the sequence being finished with a specific control character.

So choices 31" and 34" comprise respectively a front-end interrogation, asking the caller to type in category and/or address of requested business users.

At the end it's requested and acquired in 33" data regarding business user place of which we want telephone number.

Section regarding data acquisition finishes with a confirmation message 36".

In Fig. 7 procedures characterizing real retrieval phase of block 24" in Fig. 2B, are reported into detail. Cycle with end exit test 40" is provided in order to discriminate, among different possible kinds of keypad, the one of the calling telephone set. For this latter same considerations already reported for block diagram of Fig. 4 regarding retrieval system for residential subscribers information list are worth, these considerations will not be repeated during the actual description.

Two end exit tests 39" and 40" allow the iteration termination, respectively when name in data base has been found or when - by means of conversions 37" - all kinds of keypad have been considered with simultaneous search insuccess 42".

On the other hand in said cycle 24" an hit result of search phase 42" provides for creation of highest success probability subscribers list 43".

In any case before performing yet real retrieval operation in data base, other three preliminary phases are performed regarding respectively typing in mistakes control 38", uncertainty control 41" and synonyms administration 60": about these we will talk much spreadly during the following description.

It has not been reported a block diagram regarding procedures characterizing final phase 25" transmitting the user search report. In fact this procedure is substantially similar to the one included in block diagram of Fig. 5 for a residential subscriber information list automatic access. We have only to set forth that for business users it can be advantageous to have the subscriber list, possibly including a high number of alternatives, visualized on a paper support received by fax. Real search phase 42', 42" in data base provides for transmitting to a data base server single fields typed in by user in form of numeric fields. Data base server has to perform requested retrieval operations, because it comprises files having for every key and relative attributes, from extensional point of view, only numeric strings; and said files are obtained by attribute-and-key biunivocal correspondence with subscribers data base content constituted, from extensional point of view, on alphanumeric strings. Data base server compares each sent numeric string regarding a retrieval request with each numeric string comprised in surname, name, marketing category, ecc., unique field list extrapolating for each received string a numeric strings list with relative logical localizations in data base of n-best numeric keys coinciding exactly or partially with said received string and sorting each one of these n-best numeric keys lists according to hit probability. In the same retrieval phases 42' and 42" n-best numeric keys lists regarding different fields comprised in starting information are intersected and sorted according to total probability, using yet a so created overall numeric key list. This latter corresponds to a similar list in alphabetic form regarding subscribers data base usable for same subscriber data base access in order to propose the user, for final confirmation, only combinations really present in database.

Regarding specifically typing in mistakes control, as implemented in phases 38' and 38", before the real search, we have to consider that information entered by the user can also include errors, like for example, a missing or wrong or accidentally added digit with respect to correct starting input.

When a numeric string is received, from this string and through an algorithm of automatic generation, there are created specific strings providing for:

- omission of a digit at a time,
- addition in different string positions of a digit from 0 to 9,
- substitution of a string digit at a time with values from 0 to 9.

Operating in this way we guarantee a mistake correction in cases of accidental omission or addition of a digit in real string and strings correction in case of substitution of a digit with another.

So, for example, supposing that user wants to introduce surname Rossi by a standard (GSM96) keypad, the numeric string resulting is 76774.

Supposing for simplicity user has not made any error in data typing in, automatic string generation algorithm will produce the next sequence:

BLOCK 1
06774, 16774, 26774, ..., 96774, (changing first digit and keeping constant the others)
70774, 71774, 72774, ..., 79774, (changing second digit and keeping constant the others)
"

"

76770, 76771, 76772, ..., 76779, (changing last digit and keeping constant the others)
BLOCK 2
6774, 7774, 7674, 7674, 7677 taking off the starting string a positional digit from position 1 to N
BLOCK 3
076774, 176774, 276774, ..., 976774 introducing a digit in first position and translating the others to the right.
706774, 716774, 726774, ..., 796774 introducing a digit in second position and translating the others to the right.
760774, 761774, 762774, ..., 769774 introducing a digit in third position and translating the others to the right.
"

"

767740, 767741, 767742, ..., 767749 introducing a digit last position.

As we can easily see, in block 1 all the cases in which user puts error in certain string position are solved, in block 2 cases in which user puts an error leaving out one digit are solved, whereas in block 3 cases in which user introduces an extra digit in any position are solved. Now, having all the strings created according to the above explained algorithm, these latter are compared one at a time with data included in relative tables (different surnames, different names and so on for all the fields entered).

If the i-th string, after comparison, is not found in reference table-file, it will be taken off, otherwise it will be "weighted" assigning it a probabilistic weight value, which will be maximum if it will result perfectly coinciding when compared with corresponding data in table, and decreasing for strings different in at least one digit. In case, on the basis of uncertainty control method searches subscriber is not found in data base, before giving farewell message the user, system performs same comparison operations with tables regarding unique surnames, names and addresses, transcodified with other keypad sets. Best results provided by the analyses will be then presented the final user.

So system is characterized by a substantial strength also when one or more fields include a typing in mistake, for wrong substitution of a character with another or for addition or omission of a character with respect to alphabetic field which we want really to type in. Uncertainty control as performed in phases 41', 41", before real search, provides that in order to create said n-best key lists, following numeric request entry, the data base server takes off from the provided system of files, - including each one D record-, a sequence of possible alternatives and these possible alternatives of candidate keys were sorted for each requested field according to the application of a search uncertainty control algorithm valuing probability that any database key could not be in W-length list of bests.

In fact, validity of implemented process and certainty of obtainable result is supported from probabilistic analysis regarding uncertainty control techniques with special negative probability valuation tests.

In particular, if we assume that $n_1$, $n_2$, $n_3$, $n_4$, $n_5$, are the numbers of unique names of cities, surnames, christian names, names of streets and mailing address numbers, respectively, and if we assume further that $w_1$, $w_2$, $w_3$, $w_4$, $w_5$ are the numbers of unique names of cities, surnames, christian names, street names and mailing address numbers respectively, which are found in the list of the n best ones, the total number of possible records (complete addresses) is:

$$N = n_1{}^*n_2{}^*n_3{}^*n_4{}^*n_5$$

and the total number of records which can be produced by the whole number of combinations available in the list of the n best ones is:

$$W = w_1{}^*w_2{}^*w_3{}^*w_4{}^*w_5$$

Therefore, if we have a database containing D unique records, if we set:
P= probability that no element of D is found in W, and if the database contains a single record, the probability that that record is not in the set W is given by:

$$\frac{\text{total number of records not in W}}{\text{total number of records}} = \frac{N - W}{N}$$

If the database contains two records, the probability that neither of them is in the set W is given by: the probability that the first record is not in W times the probability that the second record is not in W, that is:

$$\frac{N - W}{N} {}^* \frac{N - 1 - W}{N - 1}$$

It is to be noted that in the second term of the expression the total number of records that can be equal to the second record of the database is reduced by one; the reason is that after the check for the first record of the database, we know that first record must be ignored in the following search (since the records of the database are unique).

Therefore, in the general case where there are D records in the database, the value of P is calculated as follows:

$$P = \frac{N - W}{N} * \frac{N - 1 - W}{N - 1} * \dots * \frac{N - (D - 1) - W}{N - (D - 1)}$$

wherein $D + W \le N$.

In a base example a database has been considered which was formed by one thousand records with lists of 30 cities, 50 christian names, 150 surnames, 120 street numbers and 10 mailing address numbers. Supposing the number of unique records contained in the list of the n best ones is 10 in all cases, with the exception of the mailing address number, in which case we suppose it to be equal to 1, the probability that no element of the database contains, in each of its five fields, an element present in the respective n-best list $w_n$ is 0.9636.

This means simply that it is most unlikely that a randomly generated record in the described circumstances corresponds to a record which is really present in the database. This probability is in fact equal to the probability of a random correspondence = 1 - 0.9636 = 0.0364

The recognition system provides that in the n-best list besides the searched word there are very few other words. The probability that the original word is in the list is assumed to be 1.

On the other hand, for a given w-length of the lists, it is clear that many other combinations will be recognized (W). It will therefore be necessary to make sure that these combinations, in the overwhelming majority of the cases, cannot be found randomly in the original database. The probability P ensures the validity of these premises. Resuming, a number Nc of candidates were selected by the system for next cross search phase in database, and also extending considerably system scale, there remains anyway a value of similar order. Now candidates sets (towns and surnames) - each one not above Nc -, are used to "generate" all possible combinations, from which only the ones present in database are selected. It is possible to make that the system asks special information (proper noun or address), according to what could be much useful.

Global candidates (that is the ones present in database) inherit probabilities combinated through constituting fields. We have to note that absence of a field does not invalidate global candidate search, but causes only a probabilistic penalization.

Each information, introduced by the user, reduces possible record set, till reaching eventually a limited number of global candidates.

These candidates are proposed the user for confirmation by giving him necessary data to remove possible final ambiguities.

As shown in Fig. 7 the technique for automatic access to business subscribers information list includes procedures regarding synonyms administration.

These procedures have to make possible that in any case of information typing in modality, the system could give the user one or more alternatives. For example if searched category is "abbigliamento uomo" and company name "Solomoda Rosati S.r.l." user will obtain subscriber telephone number also typing in respectively "abbigliamento", or only "Solomoda" or only "Rosati". In this way we can have disadvantageously a probabilistic penalization of search result.

In this field recognition systems known in literature are employed; these latter based on artificial intelligence adaptation and learning instruments, following sequence and meaning of acquired information value the possibility that beside a certain string it could be introduced another and which one of these could be considered as a key (alias) about which to perform a partial search or in any case that it is considered one of the possible combinations together with the others, for global search.

Among the most immediate advantages for service manager there is the almost complete automation of subscriber information list service; anyway, as already shown, to decide most complicated cases, that is when a high number of subscribers correspond to a query made with only subscriber surname or name, we may make possible for the operator that the name list chosen by the user is transmitted directly on his own terminal. In this case the operator, will help the user only in final requested number search phase, reducing interaction time with user to only few seconds.

In case of interactive menu in GSM telephone sets based on GSM SIM toolkit (phase 2, plus) and/or on WAP, "Call completion" service is another service that the system according to the invention can provide for the user: when caller has confirmed user number, system can perform directly the call, setting into communication the caller and the called.

Numerous and significant advantages of the described service for user are the following:

- less service cost;
- automatic s forwarding of the calls in case of GSMs based on GSM SIM toolkit phase 2 plus and/or on WAP utilization;
- interaction facility;
- new service simplified access;
- service availability 24/24 hours.

Much more generally, retrieval technique previously illustrateded can be used efficaciously for automation of many other services, emboding a database server specifically implemented for particular service administration.

Below we report a list of the most significant ones:

- Automatic local central office.

It makes possible to connect a user directly to a local central office extention without intervention of an operator by typing in on telephone keypad the searched person name.

- Road ways information query.

The service according the present invention makes possible to get information regarding public city transports, by typing in on telephone keypad starting address and destination address.

- Railway information and airway information.

Service makes possible, typing in starting and destination place and relative time band, to know planned trains and flights.

- Cultural property information

Service makes possible to get vocal form description of a cultural good, typing in on telephone keypad art work name and place where it's exposed.

- Information about public utility services

Service makes possible to know useful information on pharmacies, theatres, cinemas, ecc. typing in on keypad name of interesting subject, and address of place where the request is presented.

- Stock shares information in real time.

It makes possible to get in real time information regarding stock share of interest.

## Claims

1. Automatic access method in subscriber information list using telephone keypad, said telephone being operative on fixed telephone network or on cellular telephone network, based on dedicated means (12) for interactive conversation in service activation and utilization which comprises the following operative steps:

   I. enabling the user, who wants to make a telephone number search, to type on the keypad, for each letter of every string which forms a basic information field used to find the user telephone number, only one specific corresponding numeric key, and to type a particular final control key as terminator;
   II. performing an acquisition, by means of said means (12) dedicated to the interactive conversation, of a sequence of fields corresponding to the subscriber, the user wants to know the telephone number, each of these fields being acquired as numeric string and delimited by said terminator character;
   III. sending, by means of said dedicated means (12), to a database server (14), single fields typed by the telephone user in form of numeric string fields, and said database server (14) performing requested retrieval operations, being able to administer files comprising for each key and relative attributes, from extensional point of view, only numeric strings, said files being obtained by means of a biunivocal correspondence in the attribute and key, with subscriber database (15) content, this latter comprising from extensional point of view, records with alphanumeric strings;

IV. comparing each input numeric string regarding a retrieval request with each numeric string included into the unique field list corresponding to the file in the subscribers database (15), extrapolating for each input string a numeric string list with relative logical localizations of N-best numeric keys coinciding exactly or partially with said input string and sorting each of said N-best numeric key lists according to hit probability;

V. combining the N-best numeric key lists, regarding different fields comprised in the input starting data, and sorting the combination result according to whole probability; the overall numeric key list so obtained, to which corresponds logically a similar list in alphabetic form regarding same subscribers database (15), being used to enter subscribers database (15) and to propose the user, only combinations really comprised in the database for final confirmation.

2.  Automatic access method in subscriber information list using telephone keypad, based on dedicated means for interactive conversation in service activation and utilization according to claim 1 characterized in that it performs the information retrieval both in residential subscriber information list service, and in business users information list service, wherein,

    for searches related to residential subscriber information list service, it asks and acquires the fields regarding subscribers surname, name and/or address and place, and it performs reference database access through data arrangement procedures for utilization with i-th keypad coding, through procedures dedicated to typing in error control, and through algorithms dedicated to uncertainty control; whereas, for searches in business users information service, it asks and acquires the fields regarding marketing category and/or address, company denomination and place name regarding searched business subscriber, and it performs reference database access, through data arrangement procedures for utilization with i-th keypad coding, through procedures dedicated to typing in error control, and through techniques dedicated to synonym control and algorithms dedicated to uncertainty control, in order to create a possible list of highest success probability subscribers.

3.  Automatic access technique to subscriber information list by means of the telephone keypad according to claims 1 and 2, characterized in that in order to provide said n-best key lists, after the acquisition of the numeric type requests, said database server (14) extracts a set of possible alternatives from a file set comprised in the database, each file including D unique records, and said alternatives of candidate records are ordered for each required field according to an algorithm which handles the uncertainty during the search, which evalutes the probability that all records of the database are not in the W-length list of the best ones, according to the product

$$P = \frac{N - W}{N} * \frac{N - 1 - W}{N - 1} * ... * \frac{N - (D-1) - W}{N - (D-1)}$$

in which N is the total number of records which every database (14,15) may include, and $D + W \leq N$.

4.  Automatic access technique to subscriber information list by means of the telephone keypad according to claims 1, 2 and 3, characterized in that said means dedicated to the interactive link for service use, include a telephone front-end (12) that can manage interaction between the user and the telephone network system, and leading the user, through pre-recorded vocal messages, to perform operations concerning input information typing in by telephone keypad (10) .

5.  Automatic access technique to subscriber information list by means of the telephone keypad according to claims 1, 2, 3 and 4, characterized in that said means dedicated to the interactive link, for service activation and utilization, comprise specific applications and procedures guided by a menu showing each time on cellular telephone display, to the user who interacts with guided submenus, the request of input information typing in from which to obtain searched telephone number.

6.  Automatic access technique to subscriber information list by means of the telephone keypad according to claims 1 and 4 characterized in that, to distinguish the kind of keypad, initially is considered as conversion table the one of a standard keypad, and in case the subscriber record is not present in the data base, a similar search is performed, considering the conversion table corresponding to another keypad, iteratively, until the possible presence of searched record is verified and a consequential list of the most probable record is created.

7.  Automatic access technique to subscriber information list by means of the telephone keypad according to claim 1, characterized in proposing the user, by means of a vocal synthesizer, one at a time the first n-subscribers with higher probability in the list, if they are present in number of n, for a possible interactive confirmation through the typing on the keypad, of a key associated to the name proposed each time.

8. Automatic access technique to subscriber information list by means of the telephone keypad according to claims 1 and 5, characterized in transmitting through one data transmission, entered data to the data base server (14).

9. Automatic access technique to subscriber information list by means of the telephone keypad according to claims 1 and 5, characterized in transmitting the results, when search is finished, from database server to the telephone set, through one data transmission, compressing in the message the most number of alternatives to submit to the user.

10. Automatic access technique to subscriber information list by means of the telephone keypad according to claims 1, 4 and 5 characterized in automatizating calling step of searched subscriber through the only push of enter key when the telephone number has been received and visualized on the display of the telephone based on GSM SIM toolkit and/or on WAP.

11. Automatic access technique to subscriber information list by means of the telephone keypad according to claim 1 characterized in using a typing in mistake control procedure which, from numeric string with an algorithm of automatic generation, provides a sequence of strings foreseeing omission of a digit at a time in different positions, from the first to the end position in the string, correcting in this way the strings in which an accidental addition of a bit has occurred.

12. Automatic access technique to subscriber information list by means of the telephone keypad according to claim 1 characterized in using a procedure of typing in mistake control which, from numeric string with an algorithm of automatic generation, provides a sequence of strings foreseeing the addition of a digit at a time in different string positions, with digit changing from zero to nine correcting so the strings in which an accidental omission of digit has occurred.

13. Automatic access technique to subscriber information list by means of the telephone keypad according to claim 1, characterized in using a typing in mistake control procedure which, from numeric string with an algorithm of automatic generation, provides a sequence of strings foreseeing the substitution of a string digit at a time with the values from zero to nine, correcting in this way the strings in which an accidental substitution of a digit with another has occurred.

14. Automatic access technique to subscriber information list by means of the telephone keypad according to claims 1 and 2, characterized in that for automatic access on business subscriber information list, synonyms administration procedures are employed, said procedures being able to perform the substring recognition of each acquired field and to perform in single files of database possible partial searches in addition to global searches based on combination of partial keys, taken from the same isolated substrings.

EP 1 047 256 A2

FIG. 1

EP 1 047 256 A2

21'

23'

24'

25'

2 A

21"

23"

24"

25"

2 B

FIG. 2

21'

30'

31'

32'

34'

35'

33'

36'

24'

FIG. 3

FIG. 5

FIG. 4

FIG.6

FIG.7